# EUROPÄISCHE PATENTSCHRIFT

(11) **EP 0 534 235 B1**
(45) Veröffentlichungstag und Bekanntmachung des Hinweises auf die Patenterteilung: **05.06.1996**
(21) Anmeldenummer: 92115458.9
(22) Anmeldetag: 10.09.1992
(51) Int. Cl.: C08J 3/00, B29C 47/76

(54) **Verfahren zur Herstellung schlagzähmodifizierter Thermoplaste**
Process for the preparation of impact-modified thermoplastics
Procédé de préparation de matières thermoplastiques modifiés, resistants aux chocs

(30) Priorität: 25.09.1991 DE 4131872
(43) Veröffentlichungstag der Anmeldung: 31.03.1993
(73) Patentinhaber: BASF Aktiengesellschaft, D-67063 Ludwigshafen (DE)
(72) Erfinder: Farwerck, Karl-Peter, W-6520 Worms 21 (DE); Lauke, Harald, Dr., W-6800 Mannheim 1 (DE); McKee, Graham Edmund, Dr., W-6940 Weinheim (DE); Seitz, Friedrich, Dr., W-6701 Friedelsheim (DE); Guentherberg, Norbert, Dr., W-6720 Speyer (DE); Ohlig, Hilmar, W-6750 Kaiserslautern (DE); Besecke, Siegmund, Dr., p.A. Erich Besecke, W-3250 Hameln (DE); Kroeger, Harald, W-6707 Schifferstadt (DE); Loth, Wolfgang, Dr., W-6702 Bad Duerkheim (DE); Niessner, Norbert, Dr., W-6701 Friedelsheim (DE); Schlemmer, Lothar, W-6701 Maxdorf 2 (DE); Wagner, Daniel, Dr., W-6702 Bad Duerkheim (DE)

(56) Entgegenhaltungen:
- EP-A- 0 153 587
- DE-A- 2 037 784
- US-A- 4 136 251
- US-A- 4 148 991
- US-A- 4 740 560

## Beschreibung

Die vorliegende Erfindung betrifft ein verbessertes Verfahren zur Herstellung von schlagzähmodifizierten Thermoplasten durch Compoundierung von mechanisch teilweise entwässerten Kautschuk-Latices in thermoplastische Polymere oberhalb der Erweichungspunkte der thermoplastischen Polymere.

Das Zumischen von kautschukartigen Polymeren zu Thermoplasten zur Schlagzähmodifizierung von Thermoplasten ist lange bekannt. Üblicherweise wird dabei der Mischvorgang auf einem Extruder durchgeführt. Da der zu compoundierende Kautschuk in der Regel, bedingt durch seine Herstellung, als wäßrige Dispersion anfällt, hat man Verfahren zur Wasserent fernung auf Extrudern entwickelt.

In der DE-A 2,037,784 ist ein Verfahren zum Einarbeiten von Kautschuk in einen thermoplastischen Kunststoff beschrieben, bei dem Kautschuk aus einem Latex gefällt, mechanisch getrocknet und bei Temperaturen oberhalb des Erweichungspunktes des thermoplastischen Kunststoffes in letzteren eingemischt wird. Hierbei wird der Kautschuk vor dem Einmischen in den thermoplastischen Kunststoff teilweise getrocknet. Das restliche Wasser wird dann während oder nach dem Einmischen in den thermoplastischen Kunststoff entfernt. Nachteilig an diesem Verfahren ist, daß die im Kautschuk vorhandenen Verunreinigungen wie Elektrolyte im Endprodukt verbleiben. Ferner werden der Kautschuk und das thermoplastische Polymere nicht ausreichend homogen gemischt, was zu nicht befriedigenden Werten einiger physikalischer Eigenschaften wie der Schlagzähigkeit, Kerbschlagzähigkeit, multiaxialen Zähigkeit oder dem Glanz führt.

Andere bekannte Verfahren bzw. Vorrichtungen zum mechanischen Entwässern von feuchten Latices, z.B. beschrieben in der US-A 4 110 843 und in Advances in Polymer Technology 3 (1983) 41, haben die Nachteile, daß die in den Latices vorhandenen Elektrolyte nicht ausreichend entfernt werden und durch die hohen Betriebstemperaturen Schädigungen des Kautschuks, beispielsweise durch Hydrolyse, auftreten können.

Der Erfindung lag daher ein Verfahren als Aufgabe zugrunde, das die genannten Nachteile nicht aufweist.

Demgemäß wurde ein verbessertes Verfahren zur Herstellung von schlagzähmodifizierten Thermoplasten durch Compoundierung von mechanisch teilweise entwässerten Kautschuk-Latices in thermoplastische Polymere oberhalb der Erweichungspunkte der thermoplastischen Polymere gefunden, indem man die Kautschuke vor der Einmischung in die thermoplastischen Polymere in einem Extruder teilweise entwässert und das verbliebene Restwasser während der Compoundierung durch Entgasungsvorrichtungen vor und nach der Einmischstelle entfernt.

Das erfindungsgemäße Verfahren führt man vorteilhaft so aus, daß in einem Seitenextruder der Kautschuk mechanisch teilweise entwässert wird und das Ende dieses Extruders in einen anderen (Haupt)Extruder mündet, in dem der Kautschuk mit dem thermoplastischen Polymer eingemischt wird.

Wesentlich hierbei ist, daß man im Hauptextruder vor und nach der Einmischstelle mindestens eine Entgasungsstelle anbringt.

Zweckmäßig bringt man im Seitenextruder im Bereich des mittleren Drittels des Extruders eine Rückhalteschnecke an, an der ein Teil des im Kautschuk befindlichen Wassers und darin gelöste Bestandteile wie Elektrolyte abgeführt werden. In der Regel entfernt man im Seitenextruder 0,1 bis 90, bevorzugt 20 bis 70, besonders bevorzugt 50 bis 65 Gew.-% des im Kautschuk enthaltenen Wassers.

Die Temperatur im Seitenextruder wählt man in der Regel so, daß die Austrittstemperatur des teilweise entwässerten Kautschuks nicht über 100°C, bevorzugt nicht über 80°C beträgt. Dabei führt man im allgemeinen keine Wärme von außen zu, sondern kühlt vorzugsweise das Gehäuse nach an sich bekannten Methoden auf Raumtemperatur.

Die teilweise Entwässerung erreicht man in der Regel durch Druckaufbau an Abstauelementen. Die entsprechenden Maßnahmen hierzu sind dem Fachmann geläufig.

Man kann den Druck je nach rheologischem Verhalten des Kautschuks durch unterschiedliche Anordnung von Schnecken- und Knetelementen aufbauen. Beispielsweise kann man die Stauwirkung durch den Einbau folgender, dem Fachmann bekannten Elemente erreichen: Schneckenelemente mit sehr kleiner Steigung in Förderrichtung - neutraler Knetblock mit breiten Knetscheiben (nichtfördernd) - Knetblock mit einem Knetscheibenversatz, der einer Steigung entgegen der Förderrichtung entspricht - Schneckenelement mit Steigung entgegen der Förderrichtung. Die Stauwirkung kann man durch die Kombination dieser Elemente als auch durch deren Länge weiter steuern.

Das Wasser läßt man im allgemeinen durch Stopfschnecken entweichen, wobei der Kautschuk zurückgehalten wird. In der Regel reicht es aus, eine Stopfschnecke im Bereich der Hälfte der Länge des Extruders anzubringen.

Die Positionierung des Seitenextruders am Hauptextruder ist nicht kritisch. Man bevorzugt dabei im allgemeinen den Bereich des mittleren Drittels der Länge des Hauptextruders.

Im Hauptextruder entfernt man zweckmäßig den überwiegenden Teil des Restwassers, insbesondere 30 - 99 Gew.-%, besonders bevorzugt 60 - 90 Gew.-% über eine Entgasungsstelle vor der Einmischstelle, d.h. ein Teil des Wassers wird gegen den Schmelzestrom transportiert ("Rückwärtsentgasung"). In der Regel ist es dabei von Vorteil, wenn man die Entgasung vor der Einmischstelle bei vermindertem Druck im Bereich von 90 kPa bis 1 kPa, bevorzugt von 75 bis 10 kPa durchführt. Die Entgasungstelle bringt man im allgemeinen im ersten Drittel der Länge des Extruders an, besonders bevorzugt ist der Übergangsbereich zwischen dem ersten und dem zweiten Drittel, und vorzugsweise zwischen ¹/₉ und ³/₉ der Länge des Extruders vor der Einmischstelle.

Das verbleibende Restwasser und sonstige flüchtige Bestandteile entfernt man vorzugsweise durch Entgasung nach der Einmischstelle, bevorzugt durch eine Entgasungsstelle. Die Entgasungsstelle bringt man zweckmäßig im Bereich des letzten Sechstels der Länge des Hauptextruders an. In der Regel entgast man auch hier vorteilhaft bei vermindertem Druck von 90 bis 1, insbesondere von 75 bis 10 kPa.

Die Temperatur im Hauptextruder wählt man in der Regel oberhalb des Erweichungspunktes des Thermoplasten. Bevorzugt wählt man dabei Temperaturen im Bereich über 180°C, besonders bevorzugt über 200°C. Die Obergrenze des Temperaturbereiches richtet sich nach der Beschaffenheit der eingesetzten Polymere. Man bevorzugt dabei Temperaturen, bei denen keine Schädigung des thermoplastischen Polymers und des Kautschuks auftritt. Im allgemeinen wählt man Temperaturen im Bereich von 180 bis 350°C.

Die Art der Extruder ist nicht kritisch. Neben handelsüblichen Einschneckenextrudern, kann man auch Doppelschneckenextruder, die gleichsinnig drehend und ineinandergreifend, als auch gegenläufig kämmend sowie nicht kämmend sein können, verwenden. Die entsprechenden Schnekken- und Knetelemente wählt man je nach dem rheologischen Verhalten der Kautschuke und thermoplastischen Polymere. Die Entgasungsstellen versieht man in der Regel mit den in der Praxis üblichen Stopfschnekken. Die Wahl der einzelnen Elemente und deren Anordnung im Extruder sind dem Fachmann geläufig.

Für das erfindungsgemäße Verfahren kann man im Prinzip alle thermoplastischen Polymere verwenden, wobei man im allgemeinen amorphe Polymere bevorzugt. Beispielhaft seien genannt: Polymethylmethacrylat; Copolymere aus Methylmethacrylat und homologe C₂-C₈-Alkylester der (Meth)acrylsäure; Copolymere aus Styrol und Acrylnitril (SAN-Polymere) sowie aus Styrol und Methylmethacrylat, Butadien, Maleinsäureanhydrid, α-Methylstyrol, kernalkylierten und kernchlorierten Styrolen; Polystyrol; Polyvinylchlorid; Copolymere von Vinylchlorid mit Vinylidenchlorid, Propylen und Vinylestern; bevorzugt sind Polymethylmethacrylat und SAN-Polymere.

Als Kautschuke kann man beispielsweise Naturkautschuk, Polybutadien, Ethylen-Propylen-Kautschuke, Polyorganosiloxane ("Siliconkautschuke"), Polyisopren, Copolymere aus Butadien, Styrol und Acrylnitril, Polyethylacrylat, Polybutylacrylat, Polyethylhexylacrylat sowie Copolymere von Acrylestern mit Butadien, Styrol, Acrylnitril und Vinylethern einsetzen.

Den Anteil an Kautschuk in der gesamten Formmasse wählt man in der Regel im Bereich von 5 bis 95, bevorzugt von 10 bis 50 Gew.-%.

Im allgemeinen setzt man durch Emulsionspolymerisation hergestellte Acrylat- und Butadienkautschuke ein.

Als Kautschuke eignen sich in der Regel ein- und mehrstufig aufgebaute Polymere, bevorzugt mehrstufig aufgebaute. Diese bestehen im allgemeinen aus einem inneren, elastomeren Kern und einer äußeren, harten, nicht-elastomeren Hülle. Des weiteren kann man solche Kautschuke verwenden, die aus mehreren alternierenden elastomeren und nicht-elastomeren Stufen aufgebaut sind, mit der Maßgabe, daß die letzte Stufe eine nicht-elastomere Hülle ist.

Die Monomeren der elastomeren Phasen wählt man in der Regel so, daß das Elastomer eine Glasübergangstemperatur von weniger als 10°C aufweist. Hierzu baut man die elastomere Phase in der Regel im Falle von Kautschuken auf Acrylatbasis zu wenigstens 90 Gew.-%, vorzugsweise zu wenigstens 96 Gew.-% aus monofunktionellen ethylenisch ungesättigten Monomeren auf. D.h. solche Monomere, die radikalisch polymerisierbar bzw. copolymerisierbar sind, und die nur eine polymerisationsfähige Gruppe, beispielsweise eine Vinyl-, eine Vinyliden- oder eine Ethylidengruppe, enthalten.

Wenigstens die Hälfte, vorzugsweise 60 - 99,8 Gew.-% dieser Monomeren besteht im allgemeinen aus C₁-C₁₈-Alkyl-, bevorzugt C₂-C₁₀-Alkylestern der Acrylsäure wie Ethylacrylat, Butylacrylat und 2-Ethylhexylacrylat.

Als Comonomere in den Elastomerphasen wählt man beispielsweise Styrol, alpha-Methylstyrol, Vinylcarbazol, Vinylacetat, Vinylpropionat und Vinylester weiterer Fettsäuren mit 4 bis 20 C-Atomen wie Vinylbutyrat, Acrylnitril, Methacrylnitril, Ester der Methacryl-, Malein-, Fumar- und Itaconsäure, substituierte (Meth)Acrylamide und Olefine wie Ethylen.

Für den Aufbau der nicht-elastomeren (harten) Phase der Kautschuke wählt man in der Regel Methylmethacrylat und/oder Styrol als Monomere. Diese Monomere können auch copolymerisiert werden. Als Comonomere eignen sich im allgemeinen Acryl- und Methacrylsäure sowie deren C₂-C₈-Alkylester, Acrylnitril, Methacrylnitril, N-C₁-C₈-Alkyl- und N-Aryl-substituierte Acryl- und Methacrylamide wie N-Phenylacrylamid, N-C₁-C₈-Alkyl-, N-C₅-C₈-Cycloalkyl- und N-Aryl-substituierte Maleinimide wie N-Methylmaleinimid, N-Cyclohexylmaleinimid, N-Phenylmaleinimid, Maleinsäureanhydrid, alpha-Methylstyrol und Vinylacetat.

Der Anteil an Methylmethacrylat bzw. Styrol bei derartigen Copolymerisationen beträgt in der Regel 60 bis 100 Gew.-%, den Anteil der Comonomeren wählt man im allgemeinen im Bereich von 0 bis 40 Gew.-%.

Bevorzugt wählt man die Monomeren so, daß die harte Phase eine Glasübergangstemperatur von mindestens 60°C aufweist.

Den Anteil an nicht-elastomeren harten Phasen wählt man in der Regel im Bereich von 20 bis 80, bevorzugt von 25 bis 50 Gew.-% bezogen auf das Gesamtgewicht des mehrphasigen Kautschuks.

Als Kautschuke auf Butadienbasis wählt man im allgemeinen Homo- oder Copolymerisate des Butadiens mit bis zu 35 Gew.-% damit polymerisierbaren ethylenisch ungesättigten Comonomeren wie Ethylen, Propylen, Styrol, Acrylnitril, Methylmethacrylat und C₁-C₈-Alkylacrylate.

Weiterhin kann man beim Aufbau der elastomeren Phasen aller Kautschuke, insbesondere der Acrylat- und Butadien-Kautschuke, Vernetzungsmittel verwenden. Beispielhaft seien folgende Vernetzer genannt: Divinylbenzol, Butandioldimethacrylat, Hexandioldimethacrylat, Trimethylolpropantriacrylat, Trimethylolpropantrimethacrylat, Pentaerythrittetraacrylat und Pentaerythrittetramethacrylat. Weitere Vernetzer finden sich beispielsweise in der EP-A 50 265. Selbstverständlich können auch mehrere Vernetzer eingesetzt werden.

Im allgemeinen beträgt der Anteil der Vernetzungsmittel 0,05 bis 10 Gew.-%, insbesondere 0,1 bis 5 Gew.-%, bezogen auf das Gewicht der am Aufbau der elastomeren Phasen beteiligten Monomere.

Des weiteren kann man neben den genannten Vernetzungsmitteln auch sogenannte Pfropfvernetzer oder auch pfropfaktive Monomere (graft linking monomers) verwenden, d.h. Monomere mit mindestens zwei polymerisierbaren Doppelbindungen, die bei der Polymerisation mit unterschiedlicher Geschwindigkeit reagieren. Vorzugsweise verwendet man solche Verbindungen, in denen mindestens eine reaktive Gruppe mit etwa gleicher Geschwindigkeit wie die übrigen Monomeren polymersisiert, während die andere reaktive Gruppe (oder reaktiven Gruppen) beispielsweise deutlich langsamer polymerisiert (polymerisieren). Die unterschiedlichen Polymerisationsgeschwindigkeiten bewirken, daß ein bestimmter Anteil an Doppelbindungen im Kautschuk verbleibt. Pfropft man anschließend auf einen solchen Kautschuk oder auf eine solche Kautschukphase eine weitere Phase auf, so reagieren zumindest einige der noch nicht abgesättigten Doppelbindungen des Pfropfvernetzers mit den Monomeren der neuen Phase, so daß die aufgepfropfte Phase zumindest teilweise über chemische Bindungen mit der Pfropfgrundlage verknüpft ist.

Solche pfropfaktiven Monomere sind dem Fachmann bekannt. Beispielhaft seien genannt die Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Carbonsäuren sowie Triallylcyanurat. Daneben gibt es eine Vielzahl weiterer pfropfvernetzender Monomerer; für nähere Einzelheiten sei hier beispielsweise auf die US-PS 4 148 846 verwiesen.

Die pfropfaktiven Monomere können auch als Vernetzungsmittel dienen. Als ein Beispiel von vielen sei hier der Acrylsäureester des Tricyclodecenylalkohols genannt. Weitere Verbindungen dieser Art sind beispielsweise in der DE-A 1 260 135 beschrieben.

In der Regel setzt man diese pfropfvernetzenden Monomere im Bereich von 0 bis 10 Gew.-%, bevorzugt von 0,2 bis 4 Gew.-% bezogen auf das Gesamtgewicht der Monomeren ein.

Wählt man einen Kautschuk, der aus mehr als zwei Stufen aufgebaut ist, so ist es vorteilhaft, als letzte Stufe eine harte Phase zu verwenden. In einer weiteren bevorzugten Ausführungsform wählt man als erste Stufe oder Kern eine harte Phase, als zweite Stufe eine weiche Phase und als dritte Stufe eine harte Phase. Bei weiteren, d.h. mehr als drei Stufen, wählt man bevorzugt als weitere Stufen nur harte Phasen oder alternierend eine weiche und eine harte Phase.

Ferner setzt man zweckmäßig beim Aufbau einer harten Phase, die sich zwischen zwei weichen Phasen befindet, in der Regel Monomere ein, die als Pfropfvernetzer wirken. Als Pfropfvernetzer kann man die oben genannten Pfropfvernetzer einsetzen, wobei Allylmethacrylat und Triallylcyanurat bevorzugt sind.

Diese Pfropfvernetzer gebraucht man im allgemeinen im Bereich von 0,1 bis 5, bevorzugt von 0,2 bis 4 Gew.-% bezogen auf das Gesamtgewicht der am Aufbau der harten Phase beteiligten Monomere.

In der Regel wählt man den mittleren Durchmesser der Teilchen der bei dem erfindungsgemäßen Verfahren eingesetzten Mehrphasen-Kautschuke im Bereich von 10 bis 5000 nm, bevorzugt von 50 bis 2000 nm, besonders bevorzugt von 100 bis 700 nm.

Die Emulsionspolymerisation von Kautschuken führt man in an sich bekannter Weise durch (s. Houben-Weyl, Methoden der organischen Chemie, Bd. XXI,1 (1961), S.133 - 406).

Mehrstufige Polymere sowie deren Herstellung sind beispielsweise in den US-A 3,562,235, DE-A 22 53 689 oder EP-A 113 924 beschrieben.

Selbstverständlich kann man auch Mischungen verschiedener Kautschuktypen einsetzen.

Den erfindungsgemäßen Formmassen kann man die üblichen Zusatzstoffe und Verarbeitungshilfsmittel beimischen. Zweckmäßig führt man dies nach an sich bekannten Methoden bei der Herstellung der Polymere durch. Der Anteil dieser Stoffe beträgt in der Regel bis zu 60, vorzugsweise bis zu 30 Gew.-%, bezogen auf das Gesamtgewicht der eingesetzten Verbindungen.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe, Pigmente, Weichmacher, Antistatika, Flammschutzmittel sowie faser- oder teilchenförmige Füll- bzw. Verstärkungsstoffe.

Oxidationsverzögerer und Wärmestabilisatoren, die den erfindungsgemäßen Formmassen zugesetzt werden können, sind z.B. sterisch gehinderte Phenole, Hydrochinone, Phosphite und Abkömmlinge und substituierte Vertreter dieser Gruppe und Mischungen dieser Verbindungen, vorzugsweise in Mengen bis zu 5 Gew.-%, bezogen auf das Gewicht der Mischung.

Beispiele für UV-Stabilisatoren sind substituierte Resorcine, Salicylate, Benzotriazole und Benzophenone, die man im allgemeinen in Mengen bis zu 1 Gew.-%, bezogen auf das Gewicht der Mischung, einsetzen kann. Gleit- und Entformungsmittel, die man in der Regel bis zu 1 Gew.-%, bezogen auf das Gewicht der Mischung, den Polymeren zusetzen kann, sind beispielsweise Stearinsäure, Stearylalkohol, Stearinsäurealkylester und -amide sowie Ester des Pentaerythrits mit langkettigen Fettsäuren. Geeignete Farbstoffe sind organische Farbstoffe wie Anthrachinonrot, organische Pigmente und Lacke wie Phthalocyaninblau, anorganische Pigmente wie Titandioxid und Cadmiumsulfid. Als Weichmacher seien Dioctylphthalat, Dibenzylphthalat und Butylbenzylphthalat genannt.

Als Flammschutzmittel kann man die üblichen Präparate oder Kombinationen davon einsetzen wie roten Phosphor, Phosphor-Verbindungen wie die Ester der Phosphorsäure, der phosphorigen Säure, von Phosphon- und Phosphinsäure sowie tertiäre Phosphine und Phosphinoxide, beispielsweise Triphenylphosphinoxid, halogenierte organische und anorganische Verbindungen wie Tetrabrom-bisphenol-A-polycarbonat, Metalloxide wie Antimontrioxid, Fluor-Verbindungen wie Polytetrafluorethylen sowie weitere an sich bekannte Flammschutzmittel.

Als verstärkend wirkende Füllstoffe seien beispielsweise Kaliumtitanat-Whisker, Kohlenstoff- und vorzugsweise Glasfasern genannt. Die verwendeten Glasfasern können aus E-, A- oder C-Glas sein und sind vorzugsweise mit einer Schlichte und einem Haftvermittler ausgerüstet. Ihr Durchmesser beträgt in der Regel 5 bis 100 µm, bevorzugt 6 bis 20 µm. Nach ihrer Einarbeitung weisen die faserförmigen Füllstoffe vorzugsweise eine mittlere Länge von 0,05 bis 10 mm, insbesondere 0,1 bis 6 mm, besonders bevorzugt 3 bis 6 mm, auf. Man kann aber auch Endlosfasern (rovings) verwenden.

Andere geeignete Füllstoffe sind beispielsweise Glaskugeln, Wollastonit, Calciumcarbonat, Quarzmehl, Silicium- und Bornitrid, Mineralfasern, Aluminiumoxidfasern und Glimmer. Ferner seien Metallflocken (z.B. Aluminiumflocken K 102 der Fa. Transmet. Corp.), Metallpulver, Metallfasern, metallbeschichtete Füllstoffe (z.B. nickelbeschichtete Glasfasern) sowie andere Zuschlagstoffe, die elektromagnetische Wellen abschirmen können, genannt, wobei die Aluminiumflocken K 102 der Fa. Transmet. Corp. bevorzugt sind. Besonders bevorzugt sind Mischungen ausgewählt aus der Gruppe bestehend aus Aluminiumflocken, Kohlenstoffasern, Leitfähigkeitsruß und nickelbeschichteten C-Glasfasern.

Das erfindungsgemäßen Verfahren zeichnet sich gegenüber den bekannten Verfahren dadurch aus, daß während des Mischvorganges die thermische Belastung der Polymere deutlich reduziert wird, was zu verbesserten Eigenschaften, insbesondere der Kerbschlagzähigkeit, der Schlagzähigkeit sowie den optischen Eigenschaften, u.a. beim Glanz, führt.

Durch die Rückwärtsentgasung, d.h. die Entgasung vor der Einmischstelle des Kautschuks, hat das erfindungsgemäße Verfahren den Vorteil gegenüber bestehenden Verfahren, daß eine gleichmäßigere Temperaturverteilung über die gesamte (Haupt)Extruderschnecke erreicht wird, was sich nach bisherigen Beobachtungen in der nicht oder nur in geringem Ausmaß vorhandenen Gelbstichigkeit äußert.

Das erfindungsgemäße Verfahren zeichnet sich ferner dadurch aus, daß durch die Kombination von Rückwärts- und Vorwärtsentgasung die Entweichgeschwindigkeit des Wasserdampfes reduziert wird und somit Rückhalteschnecken in den Entgasungsdomen entbehrlich sind.

Die nach dem erfindungsgemäßen Verfahren hergestellten Formmassen zeichnen sich durch eine homogenere Vermischung der einzelnen Komponenten aus, was sich bei den erfindungsgemäßen Formmassen in der verbesserten multiaxialen Zähigkeit äußert.

Ein weiterer Vorteil liegt in der mechanischen Entfernung nur eines Teils des im eingesetzten Kautschuk enthaltenen Wassers. Hierdurch erreicht man einen höheren Durchsatz an Kautschuk bei gleichzeitig verringerter Energieaufnahme.

### Beispiele 1 bis 3

Die in den folgenden Beispielen erhaltenen Granulate wurden auf einer Spritzgußmaschine (Allrounder, Fa. Arburg) bei einem Druck von 45 kN und einer Temperatur von 235°C zu Schulterstäben, wie sie für Festigkeitsmessungen nach DIN 53 455 verwendet werden, verspritzt. Zur Messung der multiaxialen Zähigkeit wurde bei einer Temperatur von 280°C verspritzt. Zur Messung der Kerbschlagzähigkeit wurden Schulterstäbe bei 220°C, 250°C und bei 280°C hergestellt.

Zur Qualitätsprüfung wurden die folgenden Eigenschaften gemessen:
- Lichttransmission nach DIN 5063-T3 an 3 mm dicken Platten
- Vicat-Erweichungstemperatur B/50 (°C) nach DIN 53 460
- Schlagzähigkeit (Charpy) nach DIN 53 453
- Kerbschlagzähigkeit (Charpy) nach DIN 53 453
- Zugfestigkeit nach DIN 53 455
- multiaxiale Zähigkeit nach DIN 53 443
- Volumenfließindex MVI 230/3,8 nach DIN 53 735, wobei nach der PMMA-Formmassennorm DIN 7 745 der Volumenfließindex bei 230°C/3,8 kg bestimmt wird.

### Beispiel 1

### Herstellung eines Kautschuks

Eine Mischung bestehend aus 16,2 kg deionisiertem Wasser, 93 g einer 60 gew.-%igen Dioctylnatrium-sulfo-succinat-Lösung, 6 g Ammoniumpersulfat, 3,67 kg n-Butylacrylat, 800 g Styrol, 20 g 1,4-Butandioldimethacrylat und 30 g Allylmethacrylat wurde unter Stickstoff und unter Rühren auf 80°C erhitzt. Nach dem Abklingen der exothermen Reaktion wurde zu dieser Reaktionsmischung bei 90°C eine weitere, getrennt hergestellte Mischung bestehend aus 840 g deionisiertem Wasser, 2,38 kg Methylmethacrylat und 9 g n-Dodecylmercaptan hinzugefügt. Dann wurde die gesamte Mischung bei 95°C auspolymerisiert. Nach dem Abkühlen auf Raumtemperatur hatte die Polymerdispersion einen Feststoffgehalt von 29 Gew.-%. Der mittlere Teilchendurchmesser betrug 150 nm.

Jeweils 2 1 dieser Polymerdispersion wurden bei 78°C innerhalb von 6 min zu 4 1 einer 0,3 gew.-%igen Calciumformiat-Lösung gegeben. Anschließend wurde auf 90°C erhitzt und 30 min gerührt. Dann wurde die Reaktionsmischung auf 65°C abgekühlt. Danach wurde der koagulierte Latex abfiltriert und mit 3 1 deionisiertem Wasser gewaschen. Der so erhaltene koagulierte Kautschuk hatte einen Feststoffgehalt von 62 Gew.-%.

### Beispiel 2

### Compoundierung von PMMA mit koaguliertem Kautschuk

8,7 kg/h des in Beispiel 1 erhaltenen Kautschuks wurden in einem Extruder (ZSK 30, Fa. Werner & Pfleiderer; Seitenextruder) mit einer auf der Hälfte der Länge des Extruders angebrachten Stopfschnecke mechanisch entwässert. Das Gehäuse des Extruders wurde auf Raumtemperatur gekühlt; die Drehzahl der Schnecke betrug 200 U/min. Dabei wurden aus dem Kautschuk stündlich 2,6 kg Wasser entfernt.

Der teilentwässerte Kautschuk wurde in die Polymerschmelze einer PMMA-Formmasse (hergestellt aus 99 Gew.-% Methylmethacrylat und 1 Gew.-% Methylacrylat; MVI = 2,4 cm³/10 min) über eine Einmischstelle in einen zweiten Extruder (Hauptextruder, ZSK 30, Fa. Werner & Pfleiderer) kontinuierlich eingetragen. Pro Stunde wurden 6,6 kg PMMA in den Hauptextruder eingebracht. Die Gehäuse des Hauptextruders wurden auf 240°C erhitzt, die Schneckendrehzahl betrug 200 U/min. An einer Entgasungsstelle vor der Einmischstelle wurde bei vermindertem Druck von 40 kPa 0,7 kg/h Wasser entfernt. Die restliche Wassermenge sowie andere flüchtige Anteile wurden in einer Entgasungsstelle nach der Einmischstelle bei vermindertem Druck von 4 kPa entfernt. Die Polymermischung wurde über eine Lochdüse ausgetragen, gekühlt und anschließend granuliert. Die Bestimmung der physikalischen Eigenschaften ergab folgende Werte:

| | |
|---|---|
| Lichttransmission: | 92 % |
| Vicat-Erweichungstemperatur B: | 90°C |
| Schlagzähigkeit: | 80 kJ/m² |
| Kerbschlagzähigkeit: | 4 kJ/m² |
| Zugfestigkeit: | 1500 N/mm² |

### Beispiel 3

### Compoundierung von SAN mit koaguliertem Kautschuk

71,4 kg/h eines Kautschuks aufgebaut aus 60 Gew.-% eines Kerns aus 98 Gew.-% Butylacrylat und 2 Gew.-% des Acrylsäureesters des Tricyclodecenylalkohols sowie 40 Gew.-% einer Pfropfhülle aus 75 Gew.-% Styrol und 25 Gew.-% Acrylnitril (hergestellt nach dem in der EP-A 6503 beschriebenen Verfahren gemäß Beispiel 1 (a1) und (a2) mit dem Unterschied, daß anstelle der Calciumchloridlösung eine 0,7 gew.-%ige Magnesiumsulfatlösung als Fällmittel verwendet wurde) mit einem Restwassergehalt von 29,8 Gew.-% (bezogen auf das Gesamtgewicht des Kautschuks) wurden in einem Extruder (ZDSK 35, Fa. Werner & Pfleiderer; Seitenextruder) mechanisch entwässert. Das Gehäuse des Extruders wurde auf Raumtemperatur gekühlt; die Drehzahl der Schnecke betrug 200 U/min. Dabei wurden aus dem Kautschuk stündlich 13,3 kg Wasser entfernt.

Der teilentwässerte Kautschuk wurde in die Polymerschmelze eines Copolymeren ("SAN") aufgebaut aus Styrol (65 Gew.-%) und Acrylnitril (35 Gew.-%) und einer Viskositätszahl von 78 dl/g (gemessen als 0,5 %ige Lösung in Dimethylformamid bei 23°C) über eine Einmischstelle in einen zweiten Extruder (Hauptextruder, ZSK 53, Fa. Werner & Pfleiderer) kontinuierlich eingetragen. Pro Stunde wurden 50 kg des Copolymeren SAN in den Hauptextruder eingebracht. Das Gehäuse des Hauptextruders wurde auf 250°C erhitzt, die Schneckendrehzahl betrug 250 U/min. An einer Entgasungsstelle vor der Einmischstelle wurde bei vermindertem Druck von 50 kPa 8,24 kg/h Wasser entfernt. Die restliche Wassermenge sowie andere flüchtige Anteile wurden in einer Entgasungsstelle nach der Einmischstelle bei vermindertem Druck von 50 kPa entfernt. Die Polymermischung wurde über eine Lochdüse ausgetragen, gekühlt und anschließend granuliert.

### Vergleichsbeispiel

Compoundierung von SAN mit koaguliertem Kautschuk ohne Rückwärtsentgasung

Der Versuch aus Beispiel 3 wurde wiederholt, jedoch mit dem Unterschied, daß sich keine Entgasungsstelle vor der Einmischstelle im Hauptextruder befand, d.h., daß keine Rückwärtsentgasung durchgeführt wurde.

**Tabelle 1:**

| Physikalische Eigenschaften der Formmassen aus Beispiel 3 und dem Vergleichsbeispiel | | |
|---|---|---|
| | Beispiel 3 | Vergleichsbeispiel |
| Vicaterweichungstemperatur | 85°C | 85°C |
| MVI (220°C/10 kg) | 4,3 cm³/min | <2 cm³/min |
| Kerbschlagzähigkeit | | |
| 220°C¹/ 23°C² | 24 kJ/m² | 10 kJ/m² |
| 250°C¹ / 23°C² | 28 kJ/m² | 18 kJ/m² |
| 280°C¹ / 23°C² | 31 kJ/m² | 29 kJ/m² |
| 220°C¹ / 0°C² | 8 kJ/m² | 6 kJ/m² |
| 250°C¹ / 0°C² | 7 kJ/m² | 7 kJ/m² |
| 280°C¹ / 0°C² | 12 kJ/m² | 9 kJ/m² |
| multiaxiale Zähigkeit | 33 Nm | 25 Nm |
| Glanzbewertung | 1- | 2 |
| MdSO₄-Gehalt | 0,10 Gew-.% | 0,15 Gew.-% |

| | | |
|---|---|---|
| ¹ = Verarbeitungstemperatur des Testkörpers | | |
| ² = Temperatur bei der Messung | | |

Zur Glanzbewertung: 1 = hochglänzend (100 % Reflexion), 5 = matt (10 % Reflexion)

## Patentansprüche

1. Verfahren zur Herstellung von schlagzähmodifizierten Thermoplasten durch Compoundierung von mechanisch teilweise entwässerten Kautschuk-Latices in thermoplastische Polymere oberhalb der Erweichungspunkte der thermoplastischen Polymere, dadurch gekennzeichnet, daß man die Kautschuke vor der Einmischung in die thermoplastischen Polymere in einem im Bereich des mittleren Drittels mit einer Rückhalteschnecke ausgerüsteten Seitenextruder teilweise entwässert, wobei die Temperatur im Seitenextruder so gewählt wird, daß die Austrittstemperatur des teilweise entwässerten Kautschuks nicht über 100°C beträgt und das verbliebene Restwasser während der Compoundierung durch Entgasungsvorrichtungen vor und nach der Einmischstelle in den Hauptextruder entfernt.

2. Verwendung der schlagzähmodifizierten Thermoplaste gemäß Anspruch 1 zur Herstellung von Formkörpern.

3. Formkörper erhältlich aus den schlagzähmodifizierten Thermoplasten gemäß Anspruch 1.

## Claims

1. A process for the preparation of an impact-modified thermoplastic by compounding mechanically partially dewatered rubber latices into thermoplastic polymers at above the softening point of the thermoplastic polymers, which comprises partially dewatering the rubbers in an ancillary extruder equipped with a retention screw in the region of the central third thereof, the temperature in the ancillary extruder being selected so that the exit temperature of the partially dewatered rubber is not above 100°C, and removing the residual water by means of degassing devices during the compounding before and after the mixing point in the main extruder.

2. The use of an impact-modified thermoplastic as claimed in claim 1 for the production of moldings.

3. A molding obtainable from an impact-modified thermoplastic as claimed in claim 1.

## Revendications

1. Procédé de préparation de matières thermoplastiques modifiées dans le sens de la résilience, par incorporation et mélange de latex de caoutchouc partiellement déshydratés mécaniquement dans des polymères thermoplastiques, au-dessus des points de ramollissement des polymères thermoplastiques, caractérisé en ce qu'avant d'incorporer les caoutchoucs dans les polymères thermoplastiques, on les déshydrate partiellement dans une extrudeuse latérale équipée d'une vis sans fin de retenue dans la région du tiers moyen, la température dans l'extrudeuse latérale étant choisie de sorte que la température de sortie du caoutchouc partiellement déshydraté ne dépasse pas 100°C, et en ce que l'eau résiduelle qui subsiste est éliminée dans l'extrudeuse principale, pendant l'incorporation et le mélange, par des dispositifs de dégazage situés en amont et en aval du point d'incorporation.

2. Utilisation des matières thermoplastiques modifiées dans le sens de la résilience selon la revendication 1 pour la fabrication de corps moulés.

3. Corps moulés obtenus à partir des matières thermoplastiques modifiées dans le sens de la résilience selon la revendication 1.
